# EUROPÄISCHE PATENTSCHRIFT

(11) **EP 3 651 908 B1**
(45) Veröffentlichungstag und Bekanntmachung des Hinweises auf die Patenterteilung: **04.08.2021**
(21) Anmeldenummer: 18768779.3
(22) Anmeldetag: 22.08.2018
(51) Int. Cl.: B02C 17/18, B02C 23/00, B02C 25/00, B65D 88/66, B65D 90/48

(54) **VERFAHREN ZUM BETRIEB EINER ANLAGE, ANLAGE UND COMPUTERPROGRAMMPRODUKT**
METHOD FOR OPERATING A PLANT, PLANT AND COMPUTER PROGRAM PRODUCT
PROCÉDÉ DE FONCTIONNEMENT D'UNE INSTALLATION, INSTALLATION ET PRODUIT-PROGRAMME INFORMATIQUE

(30) Priorität: 06.09.2017 EP 17189596
(43) Veröffentlichungstag der Anmeldung: 20.05.2020
(73) Patentinhaber: Siemens Aktiengesellschaft, 80333 München (DE)
(72) Erfinder: PROCKSCH, Andreas, 90469 Nürnberg (DE); FODOR, Dan Niculae, 91227 Leinburg-Entenberg (DE)
(86) Internationale Anmeldenummer: PCT/EP2018/072669
(87) Internationale Veröffentlichungsnummer: WO 2019/048234

(56) Entgegenhaltungen:
- WO-A1-2013/110137
- JP-A- H03 275 488
- KR-B1- 101 355 766
- US-A1- 2006 124 054

## Beschreibung

Die Erfindung betrifft ein Verfahren zum Betrieb einer Anlage und eine Anlage. Die Erfindung betrifft weiter ein Computerprogrammprodukt.

Bei der Behandlung von festem Material, welches industriell verarbeitet wird, entstehen z.B. an Trichtern Anhaftungen des Materials. Diese Anhaftungen können zur Beeinträchtigung der Funktion des Trichters führen.

Insbesondere bei schwer zugänglichen Trichtern oder im Innenraum einer Mühle ist überdies eine Detektion einer Anhaftung schwierig möglich.

Die Anhaftung umfasst in der Regel eine verdichtete Ansammlung von Partikeln und ggf. Feuchtigkeit. Insbesondere bei einer Rohrmühle spricht man bei einer Anhaftung auch von einer "Frozen Charge" oder einer "festgeklebten Ladung".

US 2006/0124054 A1 offenbart eine Wirbelschichtvorrichtung, die mit einer Rüttelvorrichtung, bzw. einem mechanischen Klopfer ausgestattet ist.

Daher ist es die Aufgabe der Erfindung, eine Anhaftung an einem Bauteil zu detektieren und/oder zu entfernen.

Die Aufgabe wird durch ein Verfahren gemäß Anspruch 1 gelöst.

Weiter wird die Aufgabe durch eine Anlage gemäß Anspruch 9 gelöst.

Darüber hinaus wird die Aufgabe durch ein Computerprogrammprodukt nach Anspruch 12 gelöst.

Das Bauteil ist vorzugsweise als Trichter, als Mahlrohr, oder als Sammelbehälter ausgebildet. Die Anlage ist vorzugsweise als (Rohr-)Mühle oder Vertikalmühle, als Abfülleinrichtung oder als Sammeleinrichtung ausgebildet.

Vorteilhafte Ausführungen der Erfindung sind Gegenstand der abhängigen Ansprüche.

Der Erfindung liegt die Idee zu Grunde, dass eine Anhaftung an einer Oberfläche eines Bauteils, beispielhaft in einem Trichter oder einem Mahlrohr, anhaftet. Die Anhaftung an der Oberfläche des Bauteils verändert die Schwingungseigenschaften des Bauteils. Insbesondere wird die Resonanzfrequenz des Bauteils verändert.

Das Aufprägen der Schwingung erfolgt mit Hilfe einer Anregungseinheit.

Es wird auf das Bauteil eine erste Schwingung aufgeprägt. Mit Hilfe einer ersten Schwingung wird die Anhaftung detektiert und mit Hilfe einer zweiten Schwingung wird die Anhaftung von dem Bauteil entfernt.

Die erste und/oder die zweite Schwingung kann durch das Aufprägen einer periodischen, insbesondere sinusförmigen, Schwingung und/oder mit Hilfe zumindest eines Kraftstoßes auf das Bauteil aufgeprägt werden.

Vorzugsweise erfolgt die Anregung einer Schwingung mit einer der Resonanzfrequenzen des Bauteils.

Vorzugsweise wird die jeweilige Resonanzfrequenz zunächst mit dem Ziel bestimmt, festzustellen, ob eine Anhaftung vorliegt. Anhand der bestimmten Resonanzfrequenz oder der bestimmten Resonanzfrequenzen werden mittels mechanischer Anregung der Fläche oder des Bauteils die Fläche oder das Bauteil von der Anhaftung befreit oder die Anhaftung zumindest reduziert.

Die Feststellung der Anhaftung erfolgt durch die Analyse eines Sensorsignals. Das Sensorsignal wird von einem (Schwingungs-) Sensor bereitgestellt. Der Sensor bestimmt die Schwingungen einer Oberfläche des Bauteils. Die Anregungseinheit regt das Bauteil, insbesondere eine Oberfläche des Bauteils, zu Schwingungen an.

Die Anregungseinheit kann als Piezo-Element ausgebildet sein, das zwischen dem Bauteil und einer Befestigung des Bauteils lokalisiert sein kann.

Die Anregungseinheit weist vorzugsweise einen Stößel auf, wobei der Stößel in einstellbaren Zeitabständen mit dem Bauteil kollidiert. Durch die Kollision wird ein Kraftstoß auf die Oberfläche aufgeprägt. Durch den Kraftstoß wird eine Schwingung auf das Bauteil aufgeprägt. Die Frequenz der Schwingung, die Phasenverschiebung und/oder die Amplitude der Schwingung hängen insbesondere vom Bauteil selbst ab. Falls eine Oberfläche des Bauteils mit einer Anhaftung beaufschlagt ist, ändert sich in der Regel die Frequenz, die jeweilige Resonanzfrequenz, Amplitude und/oder Phase der aufgeprägten Schwingung, insbesondere deren Resonanzverhalten. Diese Änderung kann mit Hilfe des Sensors oder mehreren Sensoren registriert werden und anhand der Analyse der Schwingung wird auf eine Anhaftung geschlossen. Bei Vorliegen einer solchen Anhaftung kann mit Hilfe der Anregungseinheit durch das Aufprägen von zweiten Schwingungen, insbesondere zur Anregung der jeweiligen Resonanz, oder mit Hilfe von starken Kraftstößen die Anhaftung entfernt werden.

Vorzugsweise erfolgt die Aufprägung der zumindest zweiten Schwingung mit einer Frequenz, welche zumindest nahe einer jeweiligen Resonanzfrequenz des Bauteils mit der Anhaftung ist. Die Resonanzfrequenz oder die Resonanzfrequenzen werden mit Hilfe des Sensorsignals bestimmt.

Bei dem Verfahren zum Betrieb einer Anlage umfasst die Anlage ein Bauteil, wobei das Bauteil mit einer Anhaftung beaufschlagbar ist, wobei dem Bauteil ein Sensor und zumindest eine Anregungseinheit zugeordnet ist, wobei die Anregungseinheit eine erste und/oder eine zweite Schwingung auf das Bauteil aufprägt, wobei der Sensor die erste Schwingung des Bauteils ermittelt und der Sensor ein Sensorsignal einer Steuereinrichtung bereitstellt, wobei anhand des Sensorsignals ermittelt wird, ob eine Anhaftung das Bauteil beaufschlagt und wobei bei Ermittlung einer Anhaftung, durch das Aufprägen einer zweiten Schwingung die Anhaftung gelöst wird.

Bei dem Bauteil kann es sich um einen Trichter, um ein Mahlrohr oder um eine Ladefläche handeln. Bei der Anlage handelt es sich vorzugsweise um eine industrielle Anlage, vorzugsweise aus dem Bereich der Schwerindustrie, dem Bergbau oder der Grundstoffherstellung. Darüber hinaus ist das Verfahren auch zur Anwendung bei Anlagen im industriellen lebensmittelverarbeitenden Gewerbe anwendbar.

Eine Anhaftung kann Staub oder kleine Partikel, wie Kohlestaub, gemahlenem Gestein und/oder ein Bindemittel wie Öl oder Wasser aufweisen.

Die Anhaftung verändert die Schwingungseigenschaft, insbesondere die jeweilige Resonanzfrequenz des Bauteils. Ein Bauteil weist in der Regel mehrere Resonanzfrequenzen auf. Hier wird jeweils eine Resonanzfrequenz gewählt, die leicht anregbar ist.

Die Anhaftung wird vorzugsweise mit der ersten Schwingung registriert und mit der zweiten Schwingung von dem Bauteil gelöst.

Zusätzlich kann mit Hilfe des Sensors bei einem rotierbaren Bauteil ein Gegendrehmoment oder eine Gegenkraft bestimmen werden. Der Sensor dient hierbei insbesondere zur Bestimmung des Stroms des jeweiligen Antriebs, der das Drehmoment für das sich drehende Bauteil bereitstellt. Anhand des Gegendrehmoments oder der Gegenkraft kann auf eine Anhaftung an dem Bauteil geschlossen werden.

Die Anregungseinheit kann als Kraftstoßgeber ausgebildet sein, der zu festlegbaren Zeitpunkten Kraftstöße einer vorgebbaren Stärke auf das Bauteil aufprägen kann. Die Anregungseinheit kann auch so ausgebildet sein, dass eine Schwingung durch ein schwingendes Element direkt auf das Bauteil aufgeprägt wird.

Die Anregungseinheit kann insbesondere als Piezoelement ausgebildet sein, wobei das Piezoelement direkt an dem Bauteil befestigt ist.

Der Sensor ist vorzugsweise als Schwingungssensor ausgebildet. Der Sensor erfasst die Amplitude und/oder die Schwingungsfrequenz. Vorzugsweise ist der Sensor in einem Bereich des Bauteils angeordnet, der für eine Anhaftung vorteilhaft erscheint, wie nahe einer Ecke oder Kante des Bauteils.

Bevorzugt sind mehrere Sensoren einem Bauteil zugeordnet. Die Sensoren können an verschiedenen Stellen des Bauteils angeordnet sein. Beispielsweise ist ein Sensor nahe einer Anregungseinheit und ein weiterer Sensor nahe einer Position angeordnet, die oft mit einer Anhaftung beaufschlagt ist. Der Sensor zur Bestimmung einer Gegenkraft oder einem Gegendrehmoment kann auch einem Antrieb für das Bauteil zugeordnet sein.

Bevorzugt findet ein Vergleich der Sensorsignale der an unterschiedlichen Stellen des Bauteils angebrachten Sensoren statt. Durch einen Vergleich können eine Veränderung der Phase, der jeweiligen Resonanzfrequenz, der Schwingungsfrequenz und/oder der Amplitude der Schwingung erfasst werden.

Die Auswertung des zumindest einen Sensorsignals findet vorzugsweise in der Steuereinheit oder in einer, der Steuereinheit zugeordneten Recheneinheit, statt. Eine Veränderung des zumindest einen Sensorsignals über einen längeren Zeitraum, z.B. 10 Tage, hinweg deutet auf eine Anhaftung hin.

Bei Vorliegen einer Anhaftung steuert die Steuereinrichtung die Anregungseinheit an. Mit Hilfe der Anregungseinheit werden insbesondere Kraftstöße oder Schwingungen auf das Bauteil aufgeprägt. Die Schwingungen oder Kraftstöße dienen zur Entfernung der Anhaftung auf dem Bauteil.

Mit dem hier beschriebenen Verfahren lässt sich eine Anhaftung einfach erkennen, ohne dass das Bauteil wesentlich beeinträchtigt wird oder die Anlage ihren Betrieb unterbrechen muss.

Bei einer vorteilhaften Ausgestaltung der Erfindung wird bei Ermittlung einer Anhaftung durch das Aufprägen der zweiten Schwingung die Anhaftung gelöst.

Vorzugsweise ist die Amplitude der ersten Schwingung geringer als die Amplitude der zweiten Schwingung. Darüber hinaus kann die erste Schwingung mit einem schwachen Kraftstoß auf das Bauteil aufgeprägt werden und die zweite Schwingung mit einem starken Kraftstoß auf das Bauteil aufgeprägt werden. Die Ableitung und die Amplitude des starken Kraftstoßes zur Anregung der zweiten Schwingung sind vorteilhaft höher als diejenigen des schwachen Kraftstoßes zur Anregung der ersten Schwingung.

Durch die Registrierung des Vorliegens einer Anhaftung mit der ersten Schwingung können die Amplitude und/oder die Frequenz der ersten Schwingung im Hinblick auf die Registrierung der Anhaftung an dem Bauteil gewählt werden.

Durch die Registrierung des Vorliegens einer Anhaftung mit der zweiten Schwingung können die Amplitude und/oder die Frequenz der zweiten Schwingung in Hinblick auf das Entfernen der Anhaftung von dem Bauteil gewählt werden.

In einer weiteren vorteilhaften Ausgestaltung der Erfindung ermittelt der Sensor eine Frequenz, eine Amplitude und/oder eine Phase der jeweiligen Schwingung und stellt anhand der Frequenz, der Amplitude und/oder der Phase das Sensorsignal bereit.

Je nach Bauteil können mehrere Sensoren an mehreren Stellen des Bauteils positioniert sein. Vorzugsweise sind die Sensoren in unterschiedlichen Richtungen und/oder Abständen von der zumindest einen Stelle angeordnet, an der die Anregungseinheit die erste und/oder zweite Schwingung auf das Bauteil aufprägt.

Durch eine Bestimmung einer Phasendifferenz der jeweilig ermittelten Schwingung ist eine unterschiedliche Ausbreitungsgeschwindigkeiten der Schwingung durch das Bauteil erkennbar. Die Ausbreitungsgeschwindigkeit einer Schwingung kann auf eine Anhaftung an einer Position des Bauteils hindeuten.

Durch die Bestimmung von Amplitude, Phase oder Frequenz der ersten Schwingung ist vorteilhaft eine sichere Bestimmung des Vorliegens einer Anhaftung möglich.

Bei einer vorteilhaften Ausgestaltung der Erfindung erfolgen die Aufprägung der ersten Schwingung und die Aufprägung der zweiten Schwingung mit Hilfe der Anregungseinheit.

Durch die Aufprägung wird die jeweilige Schwingung angeregt.

Vorteilhaft wird so die Anhaftung mit Hilfe einer Anregungseinheit detektiert und von dem Bauteil gelöst.

Die Anregungseinheit kann fest mit dem Bauteil verbunden sein und die Schwingung an einer Stelle auf das Bauteil aufprägen.

Durch die Verwendung von nur einer Anregungseinheit kann die Anlage besonders kostengünstig hergestellt oder erweitert werden.

Bei einer weiteren vorteilhaften Ausgestaltung der Erfindung wird die erste Schwingung mit einer ersten Anregungseinheit angeregt und die zweite Schwingung wird mit einer zweiten Anregungseinheit angeregt.

Durch den Einsatz von zwei Anregungseinheiten kann die jeweilige Anregungseinheit gemäß ihrem Einsatzzweck hin ausgelegt werden.

Überdies erlaubt die zweifache Ausführung der Anregungseinheit eine verbesserte Lokalisierung der jeweiligen Anregungseinheit.

Bei einer weiteren vorteilhaften Ausgestaltung erfolgt die Ermittlung des Vorliegens der Anhaftung anhand einer Abweichung in einem Fourier-Spektrum des jeweiligen Sensorsignals.

Gemäß einer Analyse des Frequenzspektrums der Schwingungen, die durch das Bauteil mit oder ohne Anhaftung propagieren, kann besonders einfache eine Anhaftung festgestellt werden. Eine Abweichung im Fourier-Spektrum kann durch eine Mehrzahl von Messungen erfolgen. Das Fourier-Spektrum wird vorzugsweise mit einer Fast-Fourier-Transformation bereitgestellt. Falls das Fourier-Spektrum eine Abweichung zwischen zeitlich unterschiedlichen Messungen zeigt, kann eine Anhaftung vorliegen.

Durch die Analyse des Fourier-Spektrums erfolgt eine besonders einfache und sichere Feststellung des Vorliegens einer Anhaftung.

Bei einer weiteren vorteilhaften Ausgestaltung der Erfindung nimmt die Frequenz der ersten und/oder der zweiten Schwingung von 0,1 Hz bis 1 kHz, vorzugsweise zwischen 1 Hz und 50 Hz, zeitlich zu.

Vorteilhaft beginnt die jeweilige Frequenz mit einem niedrigen Wert, insbesondere 0,5 Hz. Die Frequenz steigt vorteilhaft als Funktion der Zeit bis zu einem hohen Wert, insbesondere 500 Hz, an.

Bei einer Ausführung, bei der die jeweilige Schwingung mit Hilfe von Kraftstößen auf das Bauteil erfolgt, nimmt die Zeitdauer zwischen jeweils zwei Kraftstößen ab. So werden durch die Kraftstöße Schwingungen einer ansteigenden Frequenz angeregt.

Durch einen kontinuierlichen Anstieg der Frequenz der Schwingungen werden sowohl die jeweiligen Resonanzfrequenzen des Bauteils angeregt. Zudem ist eine besonders einfache Analyse des Sensorsignals möglich, weil ein Bauteil, insbesondere im Bereich der jeweiligen Resonanzfrequenz, anregbar ist.

Bei einer weiteren vorteilhaften Ausgestaltung der Erfindung prägen die erste und/oder die zweite Anregungseinheit Schwingungen einer jeweiligen Resonanzfrequenz des Bauteils auf das Bauteil auf.

Vorzugsweise werden erste und/oder zweite Schwingungen nahe der jeweiligen Resonanzfrequenz auf das Bauteil aufgeprägt. Durch das Aufprägen einer zweiten Schwingung mit jeweils einer Resonanzfrequenz oder nahe der jeweiligen Resonanzfrequenz sind Anhaftungen besonders einfach zu entfernen.

Für die Detektion der Anhaftung wird vorzugsweise eine erste Schwingung jeweils einer Resonanzfrequenz oder nahe der jeweiligen Resonanzfrequenz des Bauteils aufgeprägt.

Da sich die jeweilige Resonanzfrequenz des Bauteils bei Vorliegen einer Anhaftung ändert, kann die Änderung besonders einfach detektiert werden.

In einer weiteren vorteilhaften Ausgestaltung der Erfindung erfolgt die Aufprägung der ersten Schwingung und/oder der zweiten Schwingung mit Hilfe von Kraftstößen.

Die Kraftstöße werden vorzugsweise durch einen Stößel einer ersten und/oder einer zweiten Anregungseinheit auf das Bauteil aufgeprägt. Die Zeit zwischen den jeweiligen Kraftstößen ist vorzugsweise abnehmend ausgestaltet. Die Intensität der Kraftstöße nimmt vorzugsweise von Kraftstoß zu Kraftstoß zu. Der jeweilige zeitliche Abstand zwischen den jeweiligen Kraftstößen kann sich auch an jeweils einer Resonanzfrequenz des Bauteils orientieren. Vorzugsweise bleibt der zeitliche Abstand zwischen den Kraftstößen bei der Anregung einer der Resonanzfrequenzen zumindest weitgehen konstant.

Durch Kraftstöße können Schwingungen auf eine einfache Art und Weise auf das Bauteil aufgeprägt werden.

Die Anlage weist ein Bauteil und eine Steuereinrichtung auf, wobei dem Bauteil zumindest eine erste Anregungseinheit und optional eine zweite Anregungseinheit und zumindest ein Sensor zugeordnet ist, wobei die erste Anregungseinheit zur Aufprägung von zumindest einer ersten Schwingung und/oder einer zweiten Schwingung auf das Bauteil ausgebildet ist, wobei der Sensor zur Ermittlung der Frequenz, der Amplitude und/oder der Phase der ersten Schwingung ausgebildet ist, wobei die Steuereinrichtung mit Hilfe der ersten Anregungseinheit und der optionalen zweiten Anregungseinheit zur Durchführung eines Verfahrens nach einem der Ansprüche 1 bis 8 vorgesehen ist.

Das Bauteil ist vorzugsweise ein Trichter oder ein Schüttrohr. Vorteilhaft umfasst die Anlage das Bauteil, wobei das Bauteil mit zumindest einem Sensor verbunden ist. Der jeweilige Sensor dient zur Bestimmung der Schwingung, die durch die jeweilige Anregungseinheit auf das Bauteil aufgeprägt wurde.

Bei einer weiteren vorteilhaften Ausgestaltung der Erfindung weist die Anlage eine zweite Anregungseinheit auf, wobei die zweite Anregungseinheit zur Aufprägung einer zweiten Schwingung vorgesehen ist.

Vorzugsweise kann die erste Anregungseinheit dort am Bauteil positioniert werden, wo die Anhaftung zu erwarten ist. Die Wirkung der Anhaftung auf die Schwingung des Bauteils ist in dieser Position am höchsten.

Vorzugsweise wird die zweite Anregungseinheit dort positioniert, wo die Aufprägung einer Schwingung den Betrieb des Bauteils in der Anlage nur minimal beeinflusst. Weiter vorteilhaft ist die zweite Schwingung dort aufzuprägen, wo das Bauteil eine hohe Stabilität aufweist.

Das Computerprogrammprodukt ist zur Installation auf einer, einer Steuereinrichtung zugeordneten, Recheneinheit vorgesehen, wobei das Computerprogrammprodukt bei Ausführung auf der Recheneinheit der hier beschriebenen Anlage zur Durchführung des hier beschriebenen Verfahrens ausgebildet ist.

Vorzugsweise erfolgt mit Hilfe des Computerprogrammprodukts eine Auswertung des jeweiligen Sensorsignals, ob eine Anhaftung an dem Bauteil vorliegt. Die Auswertung ergibt vorteilhaft auch die Art der Anhaftung durch eine Analyse des Frequenzspektrums oder einer Analyse der jeweiligen Amplitude oder Phase der ersten Schwingung.

Das Computerprogrammprodukt analysiert das jeweilige Sensorsignal vorzugsweise durch eine Fourier-Analyse des jeweiligen Sensor-Signals.

Im Folgenden wird die Erfindung anhand von Figuren näher dargestellt und erläutert. Die in den Figuren gezeigten Merkmale können fachmännisch zu neuen Ausführungsformen kombiniert werden, ohne die Erfindung zu verlassen. Es zeigen
- FIG 1: einen Trichter mit Anhaftung,
- FIG 2: ein Mahlrohr,
- FIG 3: ein beispielhaftes Verfahrensschema,
- FIG 4: einen zeitlichen Verlauf von Kraftstößen sowie
- FIG 5: eine Resonanzkurve.

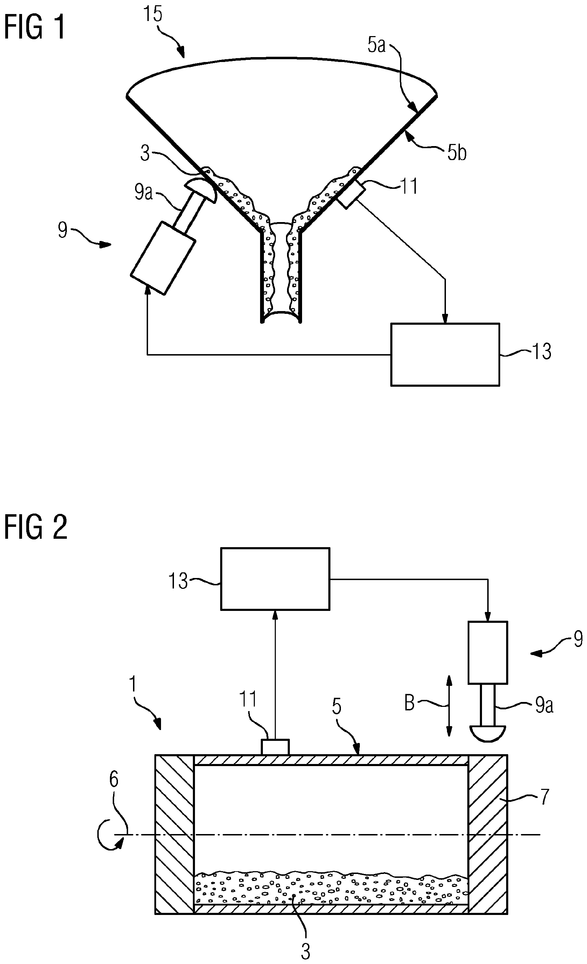

**FIG 1** zeigt einen Trichter 15. Der Trichter 15 weist an seiner ersten Oberfläche 5a eine Anhaftung 3 auf. Die erste Oberfläche 5a entspricht der nach innen zeigenden Fläche des Trichters 15. Der Trichter 15 weist an der zweiten Oberfläche 5b einen Sensor 11 auf. Der zweiten Oberfläche 5b des Trichters 15 zugewandt ist eine Anregungseinheit 9 angeordnet. Die Anregungseinheit 9 dient zur Anregung von Schwingungen des Trichters 15. Die Schwingungen werden durch den Sensor 11 in ihrer Frequenz und ihrer Amplitude erfasst. Der Sensor 11 stellt ein Sensorsignal an die Steuereinrichtung 13 bereit. Das Sensorsignal enthält die Informationen zur Amplitude und Frequenz der Schwingung.

Die Steuereinrichtung 13 dient zur Auswertung des Sensorsignals. Anhand des Sensorsignals kann mit Hilfe der Steuereinrichtung 13 festgestellt werden, ob eine Anhaftung 3 auf der ersten Oberfläche 5a des Trichters 15 vorliegt.

Die Anregungseinheit 9 weist einen Stößel 9a auf. Der Stößel 9a dient zur Anregung einer ersten Schwingung des Trichters 15. Die erste Schwingung dient zur Feststellung, ob eine Anhaftung vorliegt. Die erste Schwingung wird vorzugsweise durch einen Kraftstoß oder mehrere Kraftstöße auf den Trichter 15 angeregt.

Bei Feststellung einer Anhaftung durch die Steuereinrichtung 13 wird diese mit Hilfe der Anregungseinheit 9 von der Oberfläche des Trichters 15 entfernt. Hierzu wird der Trichter 15 mit Kraftstößen zu einer zweiten Schwingung angeregt. Die Zeitdauer dt zwischen den jeweiligen Kraftstößen kann dabei variiert werden. Vorzugsweise wird die Zeitdauer dt so gewählt, dass die zweite Schwingung der Resonanz Res des Trichters 15 mit der Anhaftung 3 entspricht.

Die Anregungseinheit 9 ist hierbei derart positioniert, dass der Stößel 9a den Trichter im Bereich der Anhaftung zur zweiten Schwingung anregt.

In FIG 1 ist das Bauteil 1, 15 als Trichter 15 ausgeführt. In FIG 2 ist das Bauteil 1, 15 dagegen als Mahlrohr 1 ausgeführt.

**FIG 2** zeigt ein Mahlrohr 1. Das Mahlrohr 1 ist Teil einer Rohrmühle. Das Mahlrohr 1 weist eine Anhaftung 3 in ihrem Innenraum auf. Bei der Anhaftung 3 handelt es sich insbesondere um eine festgeklebte Ladung. Das Mahlrohr 1 weist einen Mantel 5 auf, wobei der Mantel 5 auf seiner (nach innen zeigenden) zweiten Fläche 5a die Anhaftung 3 aufweist. Auf der zweiten Fläche 5b weist das Mahlrohr 1 den Sensor 11 auf. Der Sensor dient zur Bestimmung der ersten Schwingung, insbesondere der Amplitude und/oder der Frequenz der ersten Schwingung.

Das Mahlrohr 1 wird durch einen Antrieb (nicht gezeigt) um seine Rotationsachse 6 gedreht. Die Drehung des Mahlrohrs 1 um seine Rotationsachse 6 ist durch den gebogenen Pfeil dargestellt.

Bei Vorliegen einer Anhaftung 3 als festgeklebte Ladung werden bei einer Drehung des Mahlrohrs keine Schwingung durch die Bewegung der Ladung im Mahlrohr 1 festgestellt.

Der Sensor dient zur Feststellung der Frequenz und/oder der Amplitude der ersten Schwingung.

Ohne eine Drehung des Mahlrohrs 1 kann die erste Schwingung alternativ oder zusätzlich mit Hilfe der Anregungseinheit 9 angeregt werden.

Die Anregungseinheit 9 ist dabei vorteilhaft so angeordnet, dass der Stößel 9a die Schwingung auf einer der Seitenplatten 7 des Mahlrohrs 1 anregt.

Bei vorliegen einer Anhaftung 3 steuert die Steuereinrichtung 13 die Anregungseinheit 9 an, insbesondere mit Hilfe von Kraftstößen, dem Mahlrohr 1 eine zweite Schwingung aufzuprägen. Die zweite Schwingung wird ebenfalls durch Kraftstöße auf die Seitenplatten 7 angeregt. Die Anregung der zweiten Schwingung erfolgt durch Kraftstöße. Zwischen den jeweiligen Kraftstößen ist jeweils eine Zeitdauer dt angeordnet.

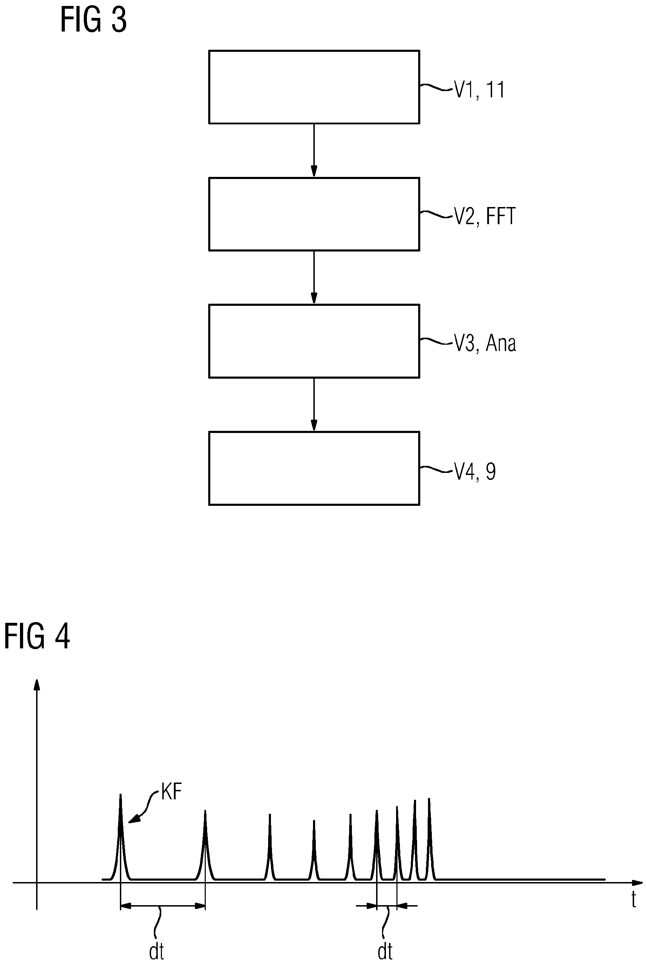

**FIG 3** zeigt ein beispielhaftes Verfahrensschema. In einem ersten Schritt V1 stellt der Sensor 11 das Sensorsignal bereit. Das Sensorsignal wird in einem zweiten Schritt V2 analysiert. Die Analyse erfolgt vorzugsweise durch eine Fast-Fourier-Transformation FFT. Durch die Fast-Fourier-Transformation FFT wird ein Frequenzspektrum der ersten Schwingung bereitstellt. Das Frequenzspektrum gibt in der Regel Hinweise auf das Vorliegen einer Anhaftung 3.

Im dritten Schritt V3 wird mit Hilfe einer Analyse Ana festgestellt, ob eine Anhaftung vorliegt. Zudem kann mit Hilfe der Analyse Ana festgestellt werden, welche jeweilige Resonanzfrequenz das Bauteil 1, 15 mit der Anhaftung aufweist.

Anhand der Analyse Ana wird in einem vierten Schritt V4 die Anregungseinheit 9 angesteuert. Die Anregungseinheit 9 regt eine zweite Schwingung des Bauteils 1, 15, insbesondere der jeweiligen Oberfläche 5a, 5b des Bauteils 1, 15, an.

**FIG 4** zeigt einen zeitlichen Verlauf der Kraftstöße KF über die Zeit t. Die Kraftstöße dienen zur Anregung der ersten und/oder der zweiten Schwingung. Gezeigt ist, dass die Zeitdauer dt zwischen den jeweiligen Kraftstößen KF abnimmt. Durch die Abnahme der jeweiligen Zeitdauer dt zwischen den Kraftstößen KF kann eine Resonanz Res angeregt werden, wobei die Frequenz der Resonanz Res zunächst nicht bekannt sein muss. Durch die abnehmende Zeitdauer dt kann auch ohne eine Analyse Ana eine Anhaftung von einer Oberfläche 5a, 5b des Bauteils 1, 15, insbesondere durch Anregung einer Resonanz, gelöst werden.

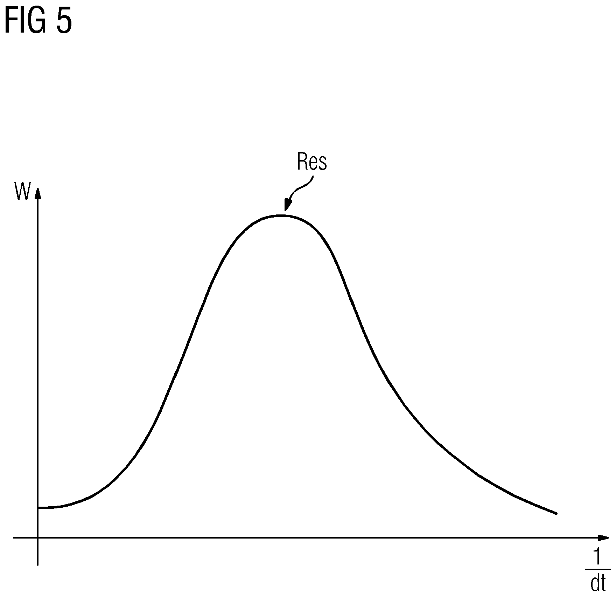

FIG 5 zeigt eine Resonanzkurve. Die Resonanzkurve zeigt, dass die Wirkung W der zweiten Schwingung auf die Anhaftung 3 zu einer Resonanz Res hin zunimmt. Bei Vorliegen der Resonanz Res ist die Wirkung W der zweiten Schwingung am stärksten, d.h. eine Anhaftung 3 wird am besten gelöst. Demnach ist es vorteilhaft, die Zeitdauer dt zwischen den Kraftstößen jeweils abnehmend zu gestalten, da so im Regelfall die Resonanz Res eines Bauteils 1, 15 angeregt wird.

Zusammenfassend betrifft die Erfindung ein Verfahren und eine Vorrichtung zum Feststellen und Lösen einer Anhaftung 3. Mit einem Sensor wird hierbei die erste Schwingung gemessen, welche durch eine Anregungseinheit 9 angeregt wird. Der Sensor 11 stellt ein Sensorsignal bereit, wobei das Sensorsignal in einer Steuereinrichtung 13 auf Vorliegen einer Anhaftung 3 hin analysiert wird. Zeigt die Analyse Ana eine Anhaftung 3 wird mit Hilfe der Anregungseinheit 9 eine zweite Schwingung auf das Bauteil 1, 15 aufgeprägt. Die zweite Schwingung dient zur Lösung der Anhaftung 3. Durch das Lösen der Anhaftung 3 kann das Bauteil 1, 15 oder die Anlage, die das Bauteil 1, 15 aufweist, länger ohne eine Wartung betrieben werden.

## Patentansprüche

1. Verfahren zum Betrieb einer Anlage, wobei die Anlage ein Bauteil (1, 15) umfasst, wobei das Bauteil (1, 15) mit einer Anhaftung (3) beaufschlagbar ist, wobei dem Bauteil (1, 15) ein Sensor (11) und eine erste Anregungseinheit (9) zugeordnet ist, wobei die erste Anregungseinheit (9) eine erste Schwingung auf das Bauteil (1, 15) aufprägt, wobei der Sensor die erste Schwingung des Bauteils (1, 15) ermittelt und der Sensor (11) ein Sensorsignal einer Steuereinrichtung (13) bereitstellt, wobei anhand einer Analyse des Sensorsignals ermittelt wird, ob eine Anhaftung (3) vorliegt, wobei anhand des Sensorsignals ermittelt wird, ob eine Anhaftung (3) das Bauteil (1, 15) beaufschlagt und bei Ermittlung einer Anhaftung (3) durch das Aufprägen einer zweiten Schwingung die Anhaftung (3) gelöst wird.

2. Verfahren nach Anspruch 1, wobei der Sensor eine Frequenz, eine Amplitude und/oder eine Phase der jeweiligen Schwingung ermittelt und anhand der Frequenz, der Amplitude und/oder der Phase das Sensorsignal bereitstellt.

3. Verfahren nach einem der vorangehenden Ansprüche, wobei die Aufprägung der ersten und der zweiten Schwingung mit Hilfe der ersten Anregungseinheit (9) erfolgt.

4. Verfahren nach einem der vorangehenden Ansprüche, wobei die erste Schwingung mit der ersten Anregungseinheit (9) angeregt wird und die zweite Schwingung mit einer zweiten Anregungseinheit (9) angeregt wird.

5. Verfahren nach einem der vorangehenden Ansprüche, wobei die Ermittlung des Vorliegens der Anhaftung (3) anhand einer Abweichung in einem Fourier-Spektrum des jeweiligen Sensor-signals erfolgt.

6. Verfahren nach einem der vorangehenden Ansprüche, wobei die Frequenz der ersten und/oder zweiten Schwingung von 0,1 Hz bis 1 kHz, vorzugsweise zwischen 1 Hz und 50 Hz, zeitlich zunimmt.

7. Verfahren nach einem der vorangehenden Ansprüche, wobei die erste und/oder die zweite Anregungseinheit (9) Schwingungen einer Resonanzfrequenz (Res) des Bauteils (1, 15) auf das Bauteil (1, 15) aufprägen.

8. Verfahren nach einem der vorangehenden Ansprüche, wobei die Aufprägung der ersten Schwingung und/oder der zweiten Schwingung mit Hilfe von Kraftstößen erfolgt.

9. Anlage, aufweisend ein Bauteil (1, 15) und eine Steuereinrichtung (13), wobei dem Bauteil (1, 15) zumindest eine erste Anregungseinheit (9) und zumindest ein Sensor (11) zugeordnet sind, wobei die erste Anregungseinheit (9) zur Aufprägung von zumindest einer ersten Schwingung auf das Bauteil (1, 15) ausgebildet ist, wobei der Sensor (11) zur Ermittlung der Frequenz, der Amplitude und/oder der Phase der ersten Schwingung ausgebildet ist, wobei die Steuereinrichtung (13) mit Hilfe der ersten Anregungseinheit (9) zur Durchführung eines Verfahrens nach einem der vorangehenden Ansprüche vorgesehen ist.

10. Anlage nach Anspruch 9, weiter aufweisend eine zweite Anregungseinheit (9), wobei die zweite Anregungseinheit (9) zur Aufprägung einer zweiten Schwingung vorgesehen ist.

11. Anlage nach Anspruch 9 oder 10, wobei die Anlage eine Rohrmühle, eine Abfülleinrichtung, ein Trichter (15) oder ein Speichergefäß ist.

12. Computerprogrammprodukt zur Installation auf einer, einer Steuereinrichtung zugeordneten, Recheneinheit, wobei das Computerprogrammprodukt bei Ausführung auf der Recheneinheit der Steuereinrichtung (13) der Anlage nach einem der Ansprüche 9 bis 11 zur Durchführung des Verfahrens nach einem der Ansprüche 1 bis 8 ausgebildet ist.

## Claims

1. Method for operating a system, wherein the system comprises a component (1, 15), wherein the component (1, 15) may be subject to buildup (3), wherein the component (1, 15) is assigned a sensor (11) and a first excitation unit (9), wherein the first excitation unit (9) imparts a first vibration to the component (1, 15), wherein the sensor detects the first vibration of the component (1, 15) and the sensor (11) provides a sensor signal to a control device (13), wherein it is determined on the basis of analysis of the sensor signal whether the component (1, 15) has buildup (3), wherein it is determined on the basis of the sensor signal whether a buildup (3) is present on the component (1, 15) and, if a buildup (3) is detected, the buildup (3) is removed by applying a second vibration.

2. Method according to claim 1, wherein the sensor determines a frequency, an amplitude and/or a phase of the respective vibration and provides the sensor signal based on the frequency, amplitude and/or phase.

3. Method according to one of the preceding claims, wherein the first and second vibrations are imparted by means of the first excitation unit (9).

4. Method according to one of the preceding claims, wherein the first vibration is excited using the first excitation unit (9) and the second vibration is excited using a second excitation unit (9).

5. Method according to one of the preceding claims, wherein the presence of the buildup (3) is determined on the basis of a variance in a Fourier spectrum of the respective sensor signal.

6. Method according to one of the preceding claims, wherein the frequency of the first and/or second vibration increases over time from 0.1 Hz to 1 kHz, preferably between 1 and 50 Hz.

7. Method according to one of the preceding claims, wherein the first and/or the second excitation unit (9) impart vibrations of a resonance frequency (Res) of the component (1, 15) to the component (1, 15).

8. Method according to one of the preceding claims, wherein the first vibration and/or the second vibration are imparted by means of impulses.

9. System, comprising a component (1, 15) and a control device (13), wherein the component (1, 15) is assigned at least one first excitation unit (9) and at least one sensor (11), wherein the first excitation unit (9) is used to impart at least one first vibration to the component (1, 15), wherein the sensor (11) is designed to determine the frequency, amplitude and/or phase of the first vibration, wherein the control device (13) is designed to carry out a method according to one of the preceding claims using the first excitation unit (9).

10. System according to claim 9, further comprising a second excitation unit (9), wherein the second excitation unit (9) is designed to impart a second vibration.

11. System according to claim 9 or 10, wherein the system is a tube mill, a filling device, a hopper (15) or a storage vessel.

12. Computer program product for installation on a processor unit assigned to a control device, wherein the computer program product is designed to carry out the method according to one of claims 1 to 8 when it is executed on the processor unit of the control device (13) of the system according to one of claims 9 to 11.

## Revendications

1. Procédé pour faire fonctionner une installation, dans lequel l'installation comprend une pièce (1, 15), dans lequel la pièce (1, 15) peut être soumise à une adhérence (3), dans lequel à la pièce (1, 15) est associé un capteur (11) et une première unité (9) d'excitation,
dans lequel la première unité (9) d'excitation imprime une première oscillation à la pièce (1, 15), dans lequel le capteur détermine la première oscillation de la pièce (1, 15) et le capteur (11) met un signal de capteur à disposition d'un dispositif (13) de commande, dans lequel à l'aide d'une analyse du signal de capteur, on détermine s'il y a une adhérence (3), dans lequel à l'aide du signal de capteur, on détermine si la pièce (1, 15) est soumise à une adhérence (3) et, si l'on détermine une adhérence (3), on détache l'adhérence (3) en imprimant une deuxième oscillation.

2. Procédé suivant la revendication 1, dans lequel le capteur détermine une fréquence, une amplitude et/ou une phase de l'oscillation respective et met à l'aide de la fréquence, de l'amplitude et/ou de la phase, le signal de capteur à disposition.

3. Procédé suivant l'une des revendications précédentes, dans lequel l'impression de la première et/ou de la deuxième oscillation s'effectue à l'aide de la première unité (9) d'excitation.

4. Procédé suivant l'une des revendications précédentes, dans lequel on excite la première oscillation par la première unité (9) d'excitation et on excite la deuxième oscillation par une deuxième unité (9) d'excitation.

5. Procédé suivant l'une des revendications précédentes, dans lequel la détermination de la présence de l'adhérence (3) s'effectue à l'aide d'une anomalie dans le spectre de Fourier du signal de capteur respectif.

6. Procédé suivant l'une des revendications précédentes, dans lequel la fréquence de la première et/ou de la deuxième oscillation augmente en fonction du temps de 0,1 Hz à 1 kHz, de préférence entre 1 Hz et 50 Hz.

7. Procédé suivant l'une des revendications précédentes, dans lequel la première et/ou la deuxième unité (9) d'excitation imprime à la pièce (1, 15) des oscillations d'une fréquence (Res) de résonnance de la pièce (1, 15).

8. Procédé suivant l'une des revendications précédentes, dans lequel l'impression de la première oscillation et/ou de la deuxième oscillation s'effectue à l'aide d'impulsions mécaniques.

9. Installation, comportant une pièce (1, 15) et un dispositif (13) de commande, au moins une première unité (9) d'excitation et au moins un capteur (11) étant associés à la pièce (1, 15), dans laquelle la première unité (9) d'excitation est constituée pour imprimer au moins une première oscillation à la pièce (1, 15), dans laquelle le capteur (11) est constitué pour la détermination de la fréquence, de l'amplitude et/ou de la phase de la première oscillation, dans laquelle le dispositif (13) de commande est prévu pour, à l'aide de la première unité (9) d'excitation, effectuer un procédé suivant l'une des revendications précédentes.

10. Installation suivant la revendication 9, comportant en outre une deuxième unité (9) d'excitation, la deuxième unité (9) d'excitation étant prévue pour l'impression d'une deuxième oscillation.

11. Installation suivant la revendication 9 ou 10, dans laquelle l'installation est un tube broyeur, un dispositif de remplissage, une trémie (15) ou un récipient de stockage.

12. Produit de programme d'ordinateur à installer sur une unité informatique associée à un dispositif de commande, le produit de programme d'ordinateur étant, lorsqu'il est réalisé sur l'unité informatique du dispositif (13) de commande de l'installation suivant l'une des revendications 9 à 11, constitué pour effectuer le procédé suivant l'une des revendications 1 à 8.
